(19) Europäisches Patentamt
European Patent Office
Office européen des brevets

(11) EP 2 133 392 B1

(12) **EUROPEAN PATENT SPECIFICATION**

(45) Date of publication and mention of the grant of the patent:
**23.02.2011 Bulletin 2011/08**

(51) Int Cl.:
***C08L 67/04*** *(2006.01)* ***C08L 69/00*** *(2006.01)*
***C08K 5/17*** *(2006.01)*

(21) Application number: **09162035.1**

(22) Date of filing: **05.06.2009**

(54) **Polylactic acid resin composition**

Polymilchsäureharzzusammensetzung

Composition de résine d'acide polylactique

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **05.06.2008 KR 20080053114**

(43) Date of publication of application:
**16.12.2009 Bulletin 2009/51**

(73) Proprietor: **Cheil Industries Inc.**
**Kumi-city, Kyungsangbuk-do 730-030 (KR)**

(72) Inventors:
- **Chung, Young-Mi**
  **Uiwang-si, Gyeonggi-do (KR)**
- **Jung, Chang-Do**
  **Uiwang-si, Gyeonggi-do (KR)**

(74) Representative: **Bublak, Wolfgang**
**Bardehle Pagenberg**
**Galileiplatz 1**
**81679 München (DE)**

(56) References cited:
**EP-A- 1 193 294** **EP-A- 1 236 753**
**EP-A- 1 792 941**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 133 392 B1

## Description

The present invention relates to a polylactic acid resin composition. More particularly, the present invention relates to a polylactic acid resin composition having excellent mechanical strength and heat resistance, and improved hydrolysis resistance.

Recent research on a polymer material has been made mainly focusing on development of a strong polymer material for special purposes, and on its safety. However, since discarding of polymer materials has become a social issue as an environment problem all over the world, development of an environmentally-friendly polymer material is required.

Environmentally-friendly polymers are largely classified into photodegradable and biodegradable polymers. In general, biodegradable polymer materials have a functional group that can be decomposed by microorganisms at their main chain. Among these materials, an aliphatic polyester polymer is most actively researched, since it has excellent manufacturing and easily-adjustable decomposition characteristics. In particular, polylactic acid (PLA) is vastly applied to food packing materials and containers, cases for electronics, and the like, replacing common plastic and covering 150,000 tons of the market. Accordingly, a polylactic acid resin has been mainly applied to disposable products, for example food containers, wrap, file, and the like using the biodegradable characteristic of polylactic acid. The polylactic acid is being produced by American Natureworks LLC, Japanese Toyota Motor Corp., and the like.

However, since a conventional polylactic acid resin lacks formability, mechanical strength, and heat-resistance, it may be easily destroyed when made into a thin film. In addition, since it has low resistance with regard to temperature, a molded product made thereof may be distorted at a temperature of 60˚C or higher.

In order to solve these problems, there has been an attempt of blending polylactic acid with a conventional petroleum-based thermoplastic plastic, for example a polycarbonate resin, a polyamide resin, an ABS resin, a polyacetal resin, and the like.

Japanese Patent Laid-Open Publication No. 1999-279380 and No. 2006-070224 disclose a method of raising heat-resistance by using a polylactic acid-ABS resin composition, and Japanese Patent Laid-Open Publication No. 2006-143772 and U.S. Patent No. 5272221 disclose a method of raising biomass by using a polylactic acid-polyamide resin composition. In addition, Japanese Patent Laid-Open Publication No. 2003-147180 and No. 2003-138119 disclose a method of raising heat-resistance and the like by using a polyoxymethylene-polylactic acid resin composition.

However, when this resin is included in an amount of 50 parts by weight or less, there is a problem in that polylactic acid has a continuous phase and thereby a polycarbonate resin has a dispersion phase due to low viscosity of the polylactic acid during the compounding process. When polylactic acid has a continuous phase, a resin composition may not have much improved properties such as thermal stability, hydrolysis resistance, and the like. Accordingly, there is no big advantage of blending a polycarbonate resin therewith.

Japanese Patent Laid-Open Publication No. 2006-321988 prescribes viscosity of polyolefin having a continuous phase when it is blended with polylactic acid. However, it does not specifically disclose a method of improving viscosity of polylactic acid.

Therefore, one object of the present invention is to provide an environmentally-friendly resin composition having remarkably improved heat-resistance, mechanical strength, and hydrolysis resistance by using a chain extender including an amine group that can react with a carboxyl group of a polylactic acid resin, so that it can increase viscosity of the polylactic acid resin and resultantly lead a phase transition into dispersion phase of the polylactic acid resin under extrusion conditions.

Another object of the present invention consists in providing a polylactic acid resin composition suitable for molded products such as a vehicle, auto parts, machine parts, electronic parts, office machines, or miscellaneous goods, which require heat-resistance and mechanical strength.

The embodiments of the present invention are not limited to the above technical purposes, and a person of ordinary skill in the art can understand other technical purposes.

To achieve those cited objects, the present invention provides a polylactic acid resin composition that includes (A) 25 to 80 parts by weight of a polylactic acid (PLA) resin, (B) 20 to 75 parts by weight of a polycarbonate resin, and (C) 0.01 to 5 parts by weight of an amine-included chain extender based on 100 parts by weight of (A)+(B).

Furthermore, the present invention, provides a molded product made from the polylactic acid resin composition.

Hereinafter, further embodiments of the present invention will be described in detail.

According to the embodiments of the present invention, a polylactic acid resin composition is environmentally-friendly and well-blended with a thermoplastic resin, and has improved heat-resistance, impact strength, and hydrolysis resistance. Accordingly, it can be usefully applied to various molded products such as a vehicle, auto parts, machine parts, electronic parts, office machines, miscellaneous goods, and the like, which require heat-resistance and mechanical strength.

FIG. 1 shows a morphology photograph of a pellet according to Example 1 of the present invention, taken with a transmission electronic microscope.

FIG. 2 shows the morphology photograph of a pellet according to Comparative Example 1 of the present invention, taken with a transmission electronic microscope.

The present invention now will be described more fully hereinafter in the following detailed description of the invention, in which some, but not all embodiments of the invention are described. Indeed, this invention may be embodied in many different forms and should not be construed as limited to the embodiments set forth herein; rather, these embodiments are provided so that this disclosure will satisfy applicable legal requirements.

As used herein, the term "(meth)acrylate" refers to both acrylate and methacrylate; the term "(nneth)acrylic acid" refers to both acrylic acid and methacrylic acid; and the term "(meth)acrylonitrile" refers to both acrylonitrile and methacrylonitrile.

The polylactic acid resin composition according to one embodiment of the present invention includes (A) 25 to 80 parts by weight of a polylactic acid (PLA) resin, and (B) 20 to 75 parts by weight of a polycarbonate resin, and (C) 0.01 to 5 parts by weight of an amine-included chain extender based on 100 parts by weight of (A)+(B).

Exemplary components included in the polylactic acid resin composition according to embodiments of the present invention will hereinafter be described in detail. However, these embodiments are only exemplary, and the present invention is not limited thereto.

(A) Polylactic acid (PLA) resin

In general, a polylactic acid resin is a polyester-based resin prepared through ester reaction of lactic acid as a monomer. The lactic acid is prepared from decomposition of corn starch.

The polylactic acid resin consists of L-lactic acid, D-lactic acid, or L,D-lactic acid. These polylactic acid resins can be used singularly or in combination. As for the polylactic acid resin, an L-isomer may be included in an amount of 95 wt% or more in terms of balance between heat-resistance and formability. Considering hydrolysis resistance, the L-isomer may be included in an amount of 95 to 100 wt%, and the D-isomer may be included in an amount of 0 to 5wt%. In addition, the D-isomer may be included in an amount of 0.01 to 2 wt%.

Furthermore, the polylactic acid resin has no limited molecular weight or molecular weight distribution as long as it can be molded. However, when it has a weight average molecular weight of 80,000 or more, it can have better influence on balance between mechanical strength and heat-resistance of molded products. In another embodiment, the polylactic acid resin may have a weight average molecular weight ranging from 90,000 to 500,000. The weight average molecular weight is generally obtained by multiplying a number average molecular weight measured using Gel Permeation Chromatography (GPC) by a polydispersity index.

The polylactic acid resin may be selected from the group consisting of a polylactic acid polymer, a polylactic acid copolymer, and a combination thereof.

The polylactic acid polymer may be prepared by ring-opening a polymerizing lactic acid selected from the group consisting of the L-isomer, the D-isomer, and a combination thereof.

The polylactic acid resin may be included in an amount of 25 to 80 parts by weight in a polylactic acid resin composition. In another embodiment, it may be included in an amount of 40 to 60 parts by weight. When the polylactic acid resin is included within the above range, it may contribute to maintaining appropriate biomass and balancing formability and heat-resistance.

(B) Polycarbonate resin

The polycarbonate resin may be prepared by reacting diphenols of the following Formula 1 with a compound selected from the group consisting of phosgene, halogen formate, a carbonate, and a combination thereof.

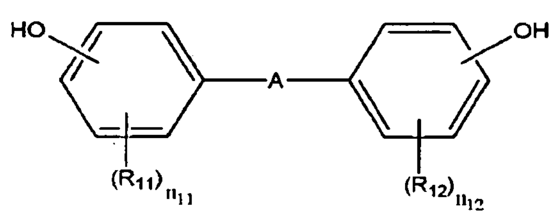

(1)

In the above Chemical Formula 1, A is a single bond, a substituted or unsubstituted C1 to C5 alkylene, a substituted or unsubstituted C1 to C5 alkylidene, a substituted or unsubstituted C2 to C5 alkenylene, a substituted or

unsubstituted C3 to C6 cycloalkylene, a substituted or unsubstituted C5 to C6 cycloalkylidene, a substituted or unsubstituted C5 to C6 cycloalkenylene, CO, S, or $SO_2$,

$R_{11}$ and $R_{12}$ are each independently a substituted or unsubstituted C1 to C30 alkyl, or a substituted or unsubstituted C6 to C30 aryl, and $n_{11}$ and $n_{12}$ are each independently integers ranging from 0 to 4.

As used herein, when a specific definition is not provided, the term "substituted" refers to one substituted with at least a substituent selected from the group consisting of a halogen, a C1 to C30 alkyl, a C1 to C30 haloalkyl, a C6 to C30 aryl, a C1 to C20 alkoxy, and combinations thereof.

The diphenols represented by the above Formula 1 may be used in combinations to constitute repeating units of the polycarbonate resin. The diphenols include hydroquinone, resorcinol, 1, 4,4'-dihydroxydiphenyl, 2,2-bis(4-hydroxyphenyl)-propane, 2,4-bis(4-hydroxyphenyl)-2-methylbutane, 1,1-bis(4-hydroxyphenyl)-cyclohexane, 2,2-bis(3-chloro-4-hydroxyphenyl)-propane, 2,2-bis(3,5-dichloro-4-hydroxyphenyl)-propane, and the like.

In one embodiment, 2,2-bis(4-hydroxyphenyl)-propane, 2,2-bis(3,5-dichloro-4-hydroxyphenyl)-propane, or 1,1-bis(4-hydroxyphenyl)-cyclohexane of the diphenols may be preferable, and in another embodiment, 2,2-bis(4-hydroxyphenyl)-propane may be more preferable.

In one embodiment, the polycarbonate resin has a weight average molecular weight ranging from 10,000 to 200,000, and in another embodiment, it has a weight average molecular weight ranging from 15,000 to 80,000, but is not limited thereto.

The polycarbonate resin may be a mixture of copolymers prepared from two or more different diphenols. The polycarbonate resin may be a linear polycarbonate resin, a branched polycarbonate resin, a polyestercarbonate copolymer, and the like.

The linear polycarbonate resin may include a bisphenol-A-based polycarbonate resin. The branched polycarbonate resin may include one produced by reacting a multi-functional aromatic compound such as trimellitic anhydride, trimellitic acid, and so on, with diphenols and a carbonate. The multi-functional aromatic compound may be included in an amount of 0.05 to 2mol% based on the total weight of the branched polycarbonate resin. The polyester carbonate copolymer resin may be prepared by reacting a difunctional carboxylic acid with diphenols and the carbonate. The carbonate may include a diaryl carbonate such as diphenyl carbonate and ethylene carbonate.

The polycarbonate resin may be added at 20 to 75 parts by weight in the polylactic acid resin composition according to one embodiment of the present invention, but in another embodiment, it may be added at 40 to 60 parts by weight. When the polycarbonate resin is included within the above range, it can be advantageous in terms of balance among heat-resistance, impact strength, and environmentally-friendly effects.

(C) Chain extender

The chain extender is a compound including an amine group that can react with the carboxyl group of a polylactic acid resin. In particular, it may include a siloxane-based compound substituted with an amine group or a polyolefin-based copolymer substituted with an amine group.

The chain extender may include a primary amine, a secondary amine, or a combination thereof as the amine group. The amine group may be included in an amount of 0.1 to 40mol% in a chain extender. In another embodiment, it may be included in an amount of 1 to 20mol%.

In particular, the chain extender may include an amine group and a main chain such as methylsiloxane, polyethylene, or polypropylene.

For example, a chain extender having siloxane main chain may be represented by the following Chemical Formula 2:

[Chemical Formula 2]

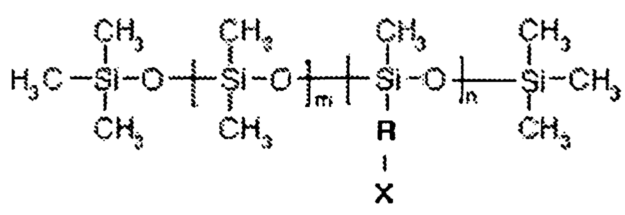

In the above Chemical Formula 2, m ranges from 300 to 2000, n ranges 5 or more, R is linear or branched C1 to C8 alkylene, and X is an amine group. The amine group may exist at the main chain or the terminal end of the C1 to C8 alkylene.

The chain extender may have a dynamic viscosity ranging from 1 to 100 Pa·s. In another embodiment, it may have viscosity ranging from 10 to 50 Pa·s. When it has dynamic viscosity within the range, it can prevent bleeding-out from a resin, or unnecessary property deterioration.

The chain extender may be included in an amount of 0.01 to 5 parts by weight in a polylactic acid resin composition based on 100 parts by weight of the (A)+(B). In another embodiment, it may be included in an amount of 0.5 to 3 parts by weight. When it is included within range, it can have appropriate viscosity for a melt extruder, and thereby can be easily mixed and molded.

(D) Other additive

A polylactic acid resin composition with the aforementioned composition may further include an impact modifier to reinforce impact strength as well as increase viscosity, when the viscosity of the polylactic acid phase is increased.

The impact modifier has excellent affinity to the polylactic acid phase. In particular, it may be a core-shell type copolymer, a linear ester-based or olefin-based copolymer, and a mixture thereof.

The core-shell graft copolymer has a core-shell structure in which an unsaturated monomer is grafted into the core of a rubber to form a hard shell. The rubber may be selected from the group consisting of a diene-based rubber, an acrylate-based rubber, and a silicone-based rubber. The unsaturated monomer includes styrene, alkyl- or halogen-substituted styrene, (meth)acrylonitrile, methacrylic acid alkyl esters, acrylic acid alkyl esters, anhydrides, and alkyl- or phenyl-N-substituted maleimides.

The rubber may be obtained from polymerization of at least one rubber monomer selected from the group consisting of a C4 to C6 diene-based rubber monomer, an acrylate-based rubber monomer, and a silicone-based rubber monomer.

The diene-based rubber includes a butadiene rubber, an ethylene/ butadiene rubber, a styrene/butadiene rubber, an acrylonitrile/butadiene rubber, an isoprene rubber, or an ethylene-propylene-diene (EPDM) tercopolymer.

The acrylate-based rubber includes acrylate monomers such as methylacrylate, ethylacrylate, n-propylacrylate, n-butylacrylate, 2-ethylhexylacrylate, hexylmethacrylate, 2-ethylhexyl(meth)acrylate, and the like. Curing agents such as ethyleneglycoldi(meth)acrylate, propyleneglycoldi(meth)acrylate, 1,3-butyleneglycoldi(meth)acrylate or 1,4-butyleneglycoldi(meth)acrylate, allyl(meth)acrylate, triallylcyanurate, and the like may be used along with the acrylate monomers.

The silicone-based rubber is obtained from a cyclosiloxane. Examples of the cyclosiloxane include hexamethylcyclotrisiloxane, octamethylcyclotetrasiloxane, decamethylcyclopentasiloxane, dodecamethylcyclohexasiloxane, trimethyltriphenylcyclotrisiloxane, tetramethyltetraphenylcyclotetrasiloxane, octaphenylcyclotetrasiloxane, and the like. Among these siloxanes, at least one can be selected to prepare a silicone-based rubber. Herein, it may further include a curing agent such as trimethoxymethylsilane, triethoxyphenylsilane, tetramethoxysilane, tetraethoxysilane, or the like.

The rubber may include a core material in an amount of 50 to 90 parts by weight. When it includes a core material within the range, it has excellent compatibility with a resin. As a result, it can have excellent impact reinforcement effects.

In addition, an unsaturated monomer capable of being grafted into the rubber may include at least one selected from the group consisting of $C_1$-$C_8$ alkyl-included methacrylic acid alkyl esters, $C_1$-$C_8$ alkyl-included acrylic acid alkyl esters, anhydrides, and an alkyl- or phenyl N-substituted maleimide.

The $C_1$-$C_8$ methacrylic acid alkyl esters or $C_1$-$C_8$ acrylic acid alkyl esters are esters obtained by reacting methacrylic acid or acrylic acid and monohydryl alcohol having a C1 to C8 alkyl. In particular, they may include (meth) acrylic acid methylester, (meth)acrylic acid ethylester, (meth)acrylic acid propylester, or the like. In one embodiment, among these, (meth)acrylic acid methylester may be preferable.

The anhydride may include an acid anhydride. In another embodiment, it may include a carboxylic anhydride such as maleic anhydride, itaconic anhydride, and the like.

The graftable unsaturated monomer may be included in a core-shell graft copolymer in an amount of less than 40 parts by weight. In another embodiment, it may be included in an amount of 5 to 30 parts by weight. When it is included within the range, it has excellent compatibility with a resin, and can resultantly bring about excellent impact reinforcement effects.

In addition, a linear ester-based or olefin-based copolymer is prepared by grafting the functional group of an epoxy group or anhydride into a thermoplastic polyester-based or polyolefin-based main chain.

For example, the olefin-based copolymer is prepared by selecting at least one from olefin-based monomers such as ethylene, propylene, isopropylene, butylene, or isobutylene. The olefin-based copolymer can be prepared by using a Ziegler-Natta catalyst, which is a common olefin polymerization catalyst. It can be prepared to have a more selective structure by using a metallocene-based catalyst. In order to improve its dispersity, a functional group such as anhydrous maleic acid, glycidylmethacrylate, oxazoline, and the like can be grafted into the olefin-based copolymer.

A method of grafting the reactive functional group into the olefin-based copolymer can be easily understood

by those who have common knowledge in this related field.

The impact modifier may be included in an amount of 0.01 to 30 parts by weight based on 100 parts by weight of the (A)+(B). In another embodiment, it may be included in an amount of 1 to 10 parts by weight. When it is included within the above range, it can accomplish impact reinforcement effects and improve mechanical strength such as tensile stress, flexural stress, flexural modulus, and the like.

Furthermore, it may include other additives selected from the group consisting of an anti-hydrolysis agent, a flame retardant, a flame retarding assistant, a lubricant, a release agent, a nucleating agent, an antistatic agent, a stabilizer, an organic/inorganic reinforcing agent, a coloring agent, an antioxidant, a weather resistance agent, an ultraviolet (UV) blocker, a filler, a plasticizer, an adhesion aid, an adhesive, and mixtures thereof, for respective purposes.

The release agent may include a fluorine-containing polymer, silicone oil, a metal salt of stearic acid, a metal salt of montanic acid, montanic acid ester wax, or polyethylene wax. The coloring agent may include a dye or a pigment.

The ultraviolet (UV) blocker may include $TiO_2$ or carbon black. The filler may include silica, clay, calcium carbonate, calcium sulfate, or glass beads. The nucleating agent may include talc or clay.

The antioxidant may include phenols, phosphites, thioethers, or amines. The weather resistance agent may include benzophenones or amines.

The additives may be included to a degree that they do not deteriorate the properties of a polylactic acid resin composition. In particular, they may be included in an amount of 40 parts by weight or less based on 100 parts by weight of the entire amount of the (A), (B), and (C) components. In another embodiment, it may be included in an amount of 0.1 to 20 parts by weight.

As for the polylactic acid resin composition, a polylactic acid resin therein has a dispersion phase, since a polycarbonate resin, which is a thermoplastic resin, which is blended under extrusion conditions, brings about its phase transition as a chain extender therein brings about viscosity increase.

In addition, a viscosity ratio ($\eta_A/\eta_B$) between the viscosity ($\eta_A$) of the polylactic acid resin and viscosity ($\eta_B$) of the polycarbonate resin may be 1 or more under the extrusion conditions (shear rate: 40 to 80 $sec^{-1}$ and extrusion temperature: 230 to 250˚C). In another embodiment, it may satisfy the following Equation 1.

[Equation 1]

$$1 < \eta_A / \eta_B < 5$$

In Equation 1, $\eta_A$ indicates the viscosity of a polylactic acid resin, and $\eta_B$ indicates the viscosity of a polycarbonate resin.

When they have a viscosity ratio ($\eta_A / \eta_B$) of I or more, a polylactic acid resin may easily have a phase transition under extrusion conditions.

The polylactic acid resin composition can be prepared according to a common method of preparing a resin composition. For example, it can be prepared into pellets by simultaneously mixing the components and other additives and fusing and extruding the mixture in an extruder.

The polylactic acid resin composition can be applied to a molded product requiring heat resistance and mechanical strength, for example a vehicle, machine parts, electronic parts, office machines such as computers and the like, or miscellaneous goods. In particular, it can be usefully applied to a housing for electronics such as a television, a computer, a printer, a washing machine, a cassette player, audio equipment, a mobile phone, and the like.

According to still another embodiment, provided is a molded product obtainable by using the polylactic acid resin composition.

Hereinafter, the present invention is illustrated in more detail with reference to examples. However, the embodiments of the present invention are exemplary, and the present invention is not limited thereto.

Examples

According to examples and comparative examples, (A) a polylactic acid resin, (B) a polycarbonate resin, (C) a chain extender, and (D) an impact modifier are as follows.

(A) Polylactic acid resin

It may include 4032D manufactured by American NatureWorks LLC.

(B) Polycarbonate resin

It may include bisphenol-A polycarbonate with a weight average molecular weight (Mw) of 25,000.

(C) Chain extender

A chain extender (manufactured by Momentive) has viscosity of 11.2

Pa·s and includes 1.62mol% amine group and methyl siloxane as a main chain.

(D) Impact modifier

METABLENE S-2001 (methyl methacrylate-butyl acrylate and dimethyl siloxane copolymer) of MRC is used as an impact modifier.

Example 1

A polylactic acid resin composition is prepared by mixing each component as shown in the following Table 1. 50 parts by weight of a polylactic acid (PLA) resin, 50 parts by weight of a polycarbonate resin, 1 part by weight of a chain extender, and 5 parts by weight of an impact modifier are put in a common screw extruder, and then extruded at a temperature ranging from 200 to 230˚C to prepare the polylactic acid resin composition into pellets.

Example 2

A polylactic acid resin composition is prepared according to the same method as Example 1, except for adding 2 parts by weight of a chain extender.

Example 3

A polylactic acid resin composition is prepared according to the same method as Example 1, except for adding 3 parts by weight of a chain extender.

Example 4

A polylactic acid resin composition is prepared according to the same method as Example 3, except for changing the amounts of polylactic acid resin and polycarbonate resin as shown in Table 1.

Example 5

A polylactic acid resin composition is prepared according to the same method as Example 3, except for changing the amounts of a polylactic acid resin and a polycarbonate resin as shown in Table 1.

Example 6

A polylactic acid resin composition is prepared according to the same method as Example 3, except for not using an impact modifier.

Comparative Example 1

A polylactic acid resin composition is prepared according to the same method as Example 1, except for not using a chain extender.

Comparative Example 2

A polylactic acid resin composition is prepared according to the same method as Example 1, except for using 10 parts by weight of a chain extender.

Comparative Example 3

A polylactic acid resin composition is prepared according to the same method as Example 5, except for not using a chain extender and an impact modifier.

(Table1)

| | unit | Examples | | | | | | Comparative Examples | | |
|---|---|---|---|---|---|---|---|---|---|---|
| | | 1 | 2 | 3 | 4 | 5 | 6 | 1 | 2 | 3 |
| (A) polylactic acid resin | parts by weight | 50 | 50 | 50 | 40 | 60 | 50 | 50 | 50 | 60 |
| (B) polycarbonate resin | parts by weight | 50 | 50 | 50 | 60 | 40 | 50 | 50 | 50 | 40 |
| (C) chain extender | parts by weight | 1 | 2 | 3 | 3 | 3 | 3 | - | 10 | - |
| (D) impact modifier | parts by weight | 5 | 5 | 5 | 5 | 5 | - | 5 | 5 | - |

Property Evaluation

The pellets according to Examples 1 to 6 and Comparative Example 1 to 3 are dried at 80˚C for 4 hours, and then extruded by using a screw extruder with extruding capability of 0.17 kg (6 oz) to prepare an ASTM dumbbell specimen. The screw extruder is set to have a cylinder temperature of 230˚C, a molding temperature of 80˚C, and a molding cycle of 60 seconds.

The specimens are evaluated regarding properties in the following method. The results are shown in the following Table 2.

(1) Thermal distortion temperature (HDT): measured based on ASTM D648.

(2) Mechanical properties: measured based on ASTM D256.

(3) Hydrolysis resistance: A flexural specimen is allowed to stand inside a thermo-hygrostat at 80˚C and 95% of RH for 120 hours and measured regarding flexural strength. Its hydrolysis resistance is calculated as a percentage (%) against flexural strength before it is allowed to stand.

(Table 2)

| | unit | Examples | | | | | | Comparative Examples | | |
|---|---|---|---|---|---|---|---|---|---|---|
| | | 1 | 2 | 3 | 4 | 5 | 6 | 1 | 2 | 3 |
| Thermal distortion temperature | ˚C | 69 | 73 | 77 | 85 | 75 | 73 | 57.3 | - | 50.4 |
| IZOD impact strength (1/4") | kgf cm/cm | 23.4 | 25.1 | 27.4 | 30.1 | 25.1 | 19.2 | 11.2 | - | 5.6 |
| Hydrolysis resistance (Flexural strength) | % | 48 | 54 | 58 | 59 | 58 | 55 | 0 | - | 0 |
| Extrusion* | | ○ | ○ | ○ | ○ | ○ | ○ | ○ | × | ○ |
| $\eta_A/\eta_B$ | | 1.7 | 2.2 | 3.5 | 3.5 | 3.5 | 3.2 | 0.8 | 5.6 | 0.7 |

As shown in Table 2, the polylactic acid resin compositions of Examples I to 3 all improve heat resistance and hydrolysis resistance. On the contrary, the polylactic acid resin composition including no chain extender according to Comparativc Example 1 has sharply-deteriorated impact strength and heat resistance, and also deteriorated hydrolysis resistance. In addition, as a chain extender is increasingly included, it turns out to improve heat resistance and hydrolysis resistance due to improved properties of polylactic acid itself.

The polylactic acid resin composition of Example 4 includes a small amount of polylactic acid, and it had an improved dispersion phase and became similar in properties to that according to Example 3. The polylactic acid resin composition of Example 5 includes more polycarbonate than polylactic acid, and a phase transition is induced therein due to a chain extender, thereby having relatively high heat resistance and hydrolysis resistance. In addition, the polylactic

acid resin composition including no impact modifier according to Example 6 turns out to have better properties than those of the comparative examples.

On the contrary, as shown in the polylactic acid resin composition of Comparative Example 2, when a chain extender is excessively included therein, it may not be extruded. In addition, comparing the polylactic acid resin compositions of Example 5 and Comparative Example 3, they include a high amount of polylactic acid but had no phase transition without a chain extender, and thereby had low heat resistance and impact strength.

The pellets of Example 1 and Comparative Example 1 are observed regarding morphology using a transmission electron microscope (TEM). The results are respectively provided in FIGs. 1 and 2.

FIG. 1 shows the morphology results photograph of a specimen prepared by using the pellets according to Example 1 of the present invention, and FIG. 2 shows the morphology results photograph of a specimen prepared by using the pellets according to Comparative Example 1.

Referring to FIG. 1 and 2, the white part indicates a polylactic acid resin and the black part indicates a polycarbonate resin.

As shown in FIG. 1 and 2, Example 1 shows a polycarbonate resin as a continuous phase and polylactic acid resin as a dispersion phase, while Comparative Example 1 shows a polylactic acid resin as a continuous phase.

In conclusion, when a chain extender is included in a polylactic acid resin composition, the polylactic acid resin had a dispersion phase due to a phase transition, and thereby has improved properties since the chain extender rectifies weak heat resistance, hydrolysis resistance, and impact strength of the polylactic acid.

## Claims

1. A polylactic acid resin composition comprising:

   (A) 25 to 80 parts by weight of a polylactic acid resin;
   (B) 20 to 75 parts by weight of a polycarbonate resin; and
   (C) 0.01 to 5 parts by weight of a chain extender including an amine group based on 100 parts by weight of the (A)+(B).

2. The polylactic acid resin composition of claim 1, wherein the polylactic acid resin comprises more than 95wt% of an L-isomer.

3. The polylactic acid resin composition of claim 1 or 2, wherein the polycarbonate resin is obtainable by reaction of compounds selected from the group consisting of diphenols represented by the following Formula 1, and phosgene, halogen formate, a carbonate, and combinations thereof:

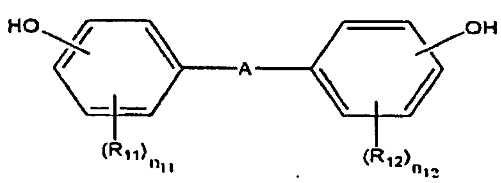

(1)

   wherein, in the above Chemical Formula 1, A is a single bond, a substituted or unsubstituted C1 to C5 alkylene, a substituted or unsubstituted C1 to C5 alkylidene, a substituted or unsubstituted C2 to C5 alkenylene, a substituted or unsubstituted C3 to C6 cycloalkylene, a substituted or unsubstituted C5 to C6 cycloalkylidene, a substituted or unsubstituted C5 to C6 cycloalkenylene, CO, S, or $SO_2$,
   $R_{11}$ and $R_{12}$ are each independently a substituted or unsubstituted C1 to C30 alkyl, or a substituted or unsubstituted C6 to C30 aryl, and
   $n_{11}$ and $n_{12}$ are each independently integers ranging from 0 to 4.

4. The polylactic acid resin composition of any of claims 1 to 3, wherein the chain extender comprises a siloxane-based compound replaced with an amine group or a polyolefin-based copolymer.

5. The polylactic acid resin composition of any of claims 1 to 4, wherein a viscosity ratio of the polycarbonate resin relative to the polylactic acid resin is 1 or more at a shear rate of 40 to 80 $sec^{-1}$ and at an extrusion temperature ranging from 230 to 250°C, and the polylactic acid resin has a dispersion phase.

6. The polylactic acid resin composition of any of claims 1 to 5, which further comprises 0.01 to 30 parts by weight of an impact modifier based on 100 parts by weight of the (A)+(B).

7. The polylactic acid resin composition of claim 6, wherein the impact modifier is selected from the group consisting of a core-shell copolymer, a copolymer prepared by grafting the functional group of an epoxy group or anhydride into a thermoplastic polyester-based or polyolefin-based main chain, and a mixture thereof,
wherein the core-shell copolymer is prepared by grafting an unsaturated monomer selected from the group consisting of styrene, an alkyl- or halogen-substituted styrene, (meth)acrylonitrile, methacrylic acid alkyl esters, acrylic acid alkyl esters, anhydrides, and alkyl- or phenyl-N-substituted maleimide into a rubber polymer selected from the group consisting of a diene-based rubber, an acrylate-based rubber, and a polymer of a silicone-based rubber monomer.

8. The polylactic acid resin composition of any of claims 1 to 7, wherein the resin composition further comprises an additive selected from the group consisting of an anti-hydrolysis agent, a flame retardant, a flame retarding assistant, a lubricant, a release agent, a nucleating agent, an antistatic agent, a stabilizer, an organic/inorganic reinforcing agent, a coloring agent, an antioxidant, a weather resistance agent, an ultraviolet (UV) blocker, a filler, a plasticizer, an adhesion aid, an adhesive, and a mixture thereof.

9. A molded product obtainable from the polylactic acid resin composition according to any of claims 1 to 8 by mixing, extruding and molding said polylactic acid resin composition.

10. Use of the polylactic acid resin composition according to any one of the preceeding claims for preparing a molded product.

**Patentansprüche**

1. Polymilchsäureharzzusammensetzung, umfassend:

(A) 25 bis 80 Gewichtsteile eines Polymilchsäureharzes;
(B) 20 bis 75 Gewichtsteile eines Polycarbonatharzes; und
(C) 0,01 bis 5 Gewichtsteile eines Kettenverlängerungsmittels, einschließend eine Amingruppe auf der Basis von 100 Gewichtsteilen (A)+(B).

2. Polymilchsäureharzzusammensetzung nach Anspruch 1, wobei das Polymilchsäureharz mehr als 95 Gew.-% eines L-Isomers umfasst.

3. Polymilchsäureharzzusammensetzung nach Anspruch 1 oder 2, wobei das Polycarbonatharz durch eine Umsetzung von Verbindungen, ausgewählt aus der Gruppe, bestehend aus Diphenolen der folgenden Formel 1, und Phosgen, Halogenformiat, einem Carbonat und Kombinationen davon erhältlich ist:

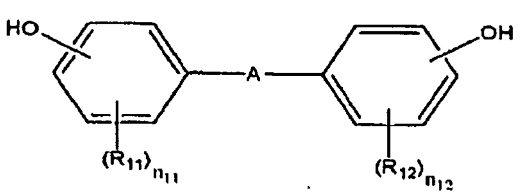

(1)

wobei in der vorstehenden chemischen Fonnel 1 A eine Einfachbindung, ein substituiertes oder unsubstituiertes C1- bis C5-Alkylen, ein substituiertes oder unsubstituiertes C1- bis C5-Alkyliden, ein substituiertes oder unsubstituiertes C2-bis C5-Alkenylen, ein substituiertes oder unsubstituiertes C3- bis C6-Cycloalkylen, ein substituiertes

oder unsubstituiertes C5- bis C6-Cycloalkyliden, ein substituiertes oder unsubstituiertes C5- bis C6-Cycloalkenylen, CO, S oder $SO_2$ ist,
$R_{11}$ und $R_{12}$ jeweils unabhängig ein substituiertes oder unsubstituiertes C1- bis C30-Alkyl oder ein substituiertes oder unsubstituiertes C6- bis C30-Aryl sind, und $n_{11}$ und $n_{12}$ jeweils unabhängig ganze Zahlen im Bereich von 0 bis 4 sind.

**4.** Polymilchsäureharzzusammensetzung nach einem der Ansprüche 1 bis 3, wobei das Kettenverlängerungsmittel eine Verbindung auf Siloxanbasis umfasst, die mit einer Amingruppe oder einem Copolymer auf Polyolefinbasis ersetzt ist.

**5.** Polymilchsäureharzzusammensetzung nach einem der Ansprüche 1 bis 4, wobei ein Viskositätsverhältnis des Polycarbonatharzes in Bezug auf das Polymilchsäureharz bei einer Schergeschwindigkeit von 40 bis 80 $Sek.^{-1}$ und bei einer Extrusionstemperatur im Bereich von 230 bis 250˚C 1 oder mehr beträgt und das Polymilchsäureharz eine Dispersionsphase aufweist.

**6.** Polymilchsäureharzzusammensetzung nach einem der Ansprüche 1 bis 5, das des Weiteren 0,01 bis 30 Gewichtsteile eines Schlagmodifikators auf der Basis von 100 Gewichtsteilen (A)+(B) umfasst.

**7.** Polymilchsäureharzzusammensetzung nach Anspruch 6, wobei der Schlagmodifikator ausgewählt ist aus der Gruppe, bestehend aus einem Kern-Schale-Copolymer, einem Copolymer, das durch Pfropfen der funktionellen Gruppe einer Epoxygruppe oder eines Anhydrids in eine Hauptkette auf der Basis eines thermoplastischen Polyesters oder Polyolefins hergestellt ist, und einem Gemisch davon,
wobei das Kem-Schale-Copolymer durch Pfropfen eines ungesättigten Monomers, ausgewählt aus der Gruppe, bestehend aus Styrol, einem alkyl- oder halogensubstituierten Styrol, (Meth)acrylnitril, Methacrylsäurealkylestern, Acrylsäurealkylestern, Anhydriden und Alkyl- oder Phenyl-N-substituiertem Maleiimid in ein Kautschukpolymer, ausgewählt aus der Gruppe, bestehend aus einem Kautschuk auf Dienbasis, einem Kautschuk auf Acrylatbasis und einem Polymer aus einem Kautschukmonomer auf Siliconbasis, hergestellt ist.

**8.** Polymilchsäureharzzusammensetzung nach einem der Ansprüche 1 bis 7, wobei die Harzzusammensetzung des Weiteren einen Zusatz umfasst, der ausgewählt ist aus der Gruppe, bestehend aus einem Antihydrolysemittel, einem Flammhemmer, einem flammhemmenden Hilfsmittel, einem Schmiermittel, einem Trennmittel, einem Keimbildner, einem Antistatikmittel, einem Stabilisator, einem organischen/anorganischen Verstärkungsmittel, einem Farbmittel, einem Antioxidationsmittel, einem Wetterfestigkeitsmittel, einem Ultraviolett(UV)-Blocker, einem Füllstoff, einem Weichmacher, einer Hafthilfe, einem Klebstoff und einem Gemisch davon.

**9.** Formprodukt, das aus der Polymilchsäureharzzusammensetzung nach einem der Ansprüche 1 bis 8 durch Mischen, Extrudieren und Formen der Polymilchsäureharzzusammensetzung erhältlich ist.

**10.** Verwendung der Polymilchsäureharzzusammensetzung nach einem der vorangehenden Ansprüche zur Herstellung eines Formprodukts.

## Revendications

**1.** Composition de résine de poly(acide lactique), comprenant :

(A) 25 à 80 parties en poids d'une résine de poly(acide lactique) ;
(B) 20 à 75 parties en poids d'une résine de polycarbonate ; et
(C) 0,01 à 5 parties en poids d'un allongeur de chaîne, comprenant une groupe amine, pour 100 parties en poids de (A) + (B) .

**2.** Composition de résine de poly(acide lactique) de la revendication 1, la résine de poly(acide lactique) comprenant plus de 95 % en poids d'un isomère L.

**3.** Composition de résine de poly(acide lactique) de la revendication 1 ou 2, dans laquelle la résine de polycarbonate peut être obtenue par réaction de composés choisis dans le groupe consistant en les diphénols représentés par la formule 1 ci-après, et le phosgène, les halogénoformiates, un carbonate et les combinaisons de ceux-ci

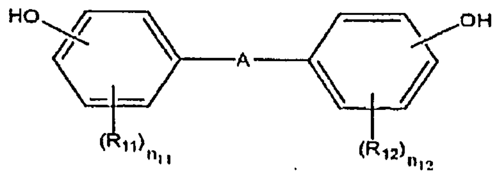

(1)

où, dans la Formule Chimique 1 ci-dessus, A est une liaison simple, un radical alkylène en C1 à C5 substitué ou non substitué, alkylidène en C1 à C5 substitué ou non substitué, alcénylène en C2 à C5 substitué ou non substitué, cycloalkylène en C3 à C6 substitué ou non substitué, cycloalkylidène en C5 à C6 substitué ou non substitué, cycloalcénylène en C5 à C6 substitué ou non substitué, CO, S ou $SO_2$,
$R_{11}$ et $R_{12}$ représentent chacun indépendamment de l'autre un radical alkyle en C1 à C30 substitué ou non substitué, ou aryle en C6 à C30 substitué ou non substitué, et
$n_{11}$ et $n_{12}$ représentent chacun indépendamment de l'autre un entier compris dans la plage de 0 à 4.

**4.** Composition de résine de poly(acide lactique) de l'une quelconque des revendications 1 à 3, dans laquelle l'allongeur de chaîne comprend un composé à base de siloxane, remplacé par un groupe amine ou un copolymère à base d'une polyoléfine.

**5.** Composition de résine de poly(acide lactique) de l'une quelconque des revendications 1 à 4, dans laquelle le rapport entre la viscosité de la résine de polycarbonate et celle de la résine de poly(acide lactique) est égal à 1 ou plus pour une vitesse de cisaillement de 40 à 80 $s^{-1}$ et à une température d'extrusion comprise dans la plage de 230 à 250°C, et la résine de poly(acide lactique) possède une phase en dispersion.

**6.** Composition de résine de poly(acide lactique) de l'une quelconque des revendications 1 à 5, qui comprend en outre de 0,01 à 30 parties en poids d'un modifiant choc, pour 100 parties en poids de (A)+(B).

**7.** Composition de résine de poly(acide lactique) de la revendication 6, dans laquelle le modifiant choc est choisi dans le groupe consistant en un polymère coeur-coque, un copolymère préparé par greffage du groupe fonctionnel d'un groupe époxy ou d'un anhydride à une chaîne principale à base d'un polyester thermoplastique ou d'une polyoléfine, et un mélange de ceux-ci,
où le copolymère coeur-coque est préparé par greffage d'un monomère insaturé, choisi dans le groupe consistant en le styrène, un styrène à substitution alkyle ou halogéno, le (meth)acrylonitrile, les esters alkyliques de l'acide méthacrylique, les esters alkyliques de l'acide acrylique, les anhydrides, et les alkyl- ou phényl-maléimides N-substitués, à un polymère caoutchouteux choisi dans le groupe consistant en un caoutchouc à base de diène, un caoutchouc à base d'acrylate et un polymère d'un monomère de caoutchouc à base de silicone.

**8.** Composition de résine de poly(acide lactique) de l'une quelconque des revendications 1 à 7, la composition de résine comprenant en outre un additif choisi dans le groupe consistant en un agent anti-hydrolyse, un retardateur de flamme, un auxiliaire de retardateur de flamme, un lubrifiant, un agent de démoulage, un agent de nucléation, un agent antistatique, un stabilisant, un agent de renfort organique/inorganique, un agent colorant, un anti-oxydant, un agent de résistance aux intempéries, un agent bloquant les ultraviolets (UV), une charge, un plastifiant, un auxiliaire d'adhérence, un adhésif et un mélange de deux-ci.

**9.** Produit moulé, pouvant être obtenu à partir de la composition de résine de poly(acide lactique) selon l'une quelconque des revendications 1 à 8, par mélange, extrusion et moulage de ladite composition de résine de poly(acide lactique).

**10.** Utilisation de la composition de résine de poly(acide lactique) selon l'une quelconque des revendications précédentes, pour préparer un produit moulé.

FIG. 1

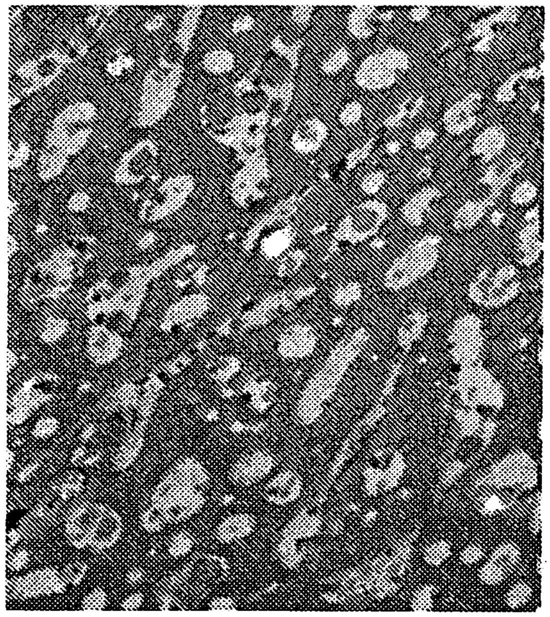

FIG. 2

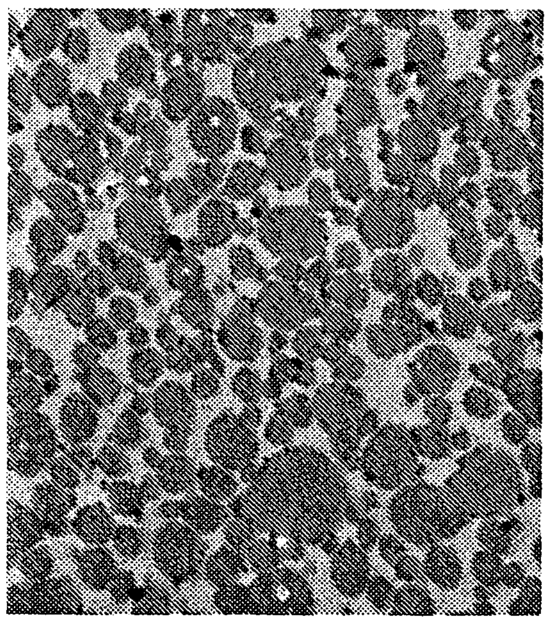

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 11279380 A
- JP 2006070224 A
- JP 2006143772 A
- US 5272221 A
- JP 2003147180 A
- JP 2003138119 A
- JP 2006321988 A